Europäisches Patentamt

(19) European Patent Office

Office européen des brevets

(11) Publication number: **0 236 521**
B1

# (12) EUROPEAN PATENT SPECIFICATION

(45) Date of publication of the patent specification:
05.12.90

(51) Int. Cl.⁵: **G02B 27/00,** B23K 26/06, G02B 5/08

(21) Application number: 86103270.4

(22) Date of filing: 11.03.86

(54) Reflection type optical device.

(43) Date of publication of application:
16.09.87 Bulletin 87/38

(45) Publication of the grant of the patent:
05.12.90 Bulletin 90/49

(84) Designated Contracting States:
DE FR GB

(56) References cited:
EP-A- 0 080 597
GB-A- 2 062 282
US-A- 2 683 394
US-A- 4 422 893

LASER FOCUS, vol. 15, no. 11, November 1979,
pages 68-71, Newton, Mass., US; S.L. REAM: "A convex
beam integrator"
IBM TECHNICAL DISCLOSURE BULLETIN, vol. 13,
no. 10, March 1971, page 3098, New York, US; M.
ARRABITO et al.: "Laser perforation technique"

(73) Proprietor: KABUSHIKI KAISHA TOSHIBA, 72,
Horikawa-cho Saiwai-ku, Kawasaki-shi
Kanagawa-ken 210(JP)

(72) Inventor: Kimura, Seiichirou, 301, Daini Koganei Green
Heim 3-15-3, Naka-Cho, Koganei-Shi Tokyo-To(JP)

(74) Representative: Münzhuber, Robert, Dipl.-Phys.,
Patentanwalt Rumfordstrasse 10,
D-8000 München 5(DE)

## Description

This invention relates to a reflection type optical device comprising a convex integration mirror prepared by forming side by side a plurality of plane segment mirrors on a material having convex outer configuration so that a laser beam is divided and reflected by said integration mirror as reflected laser beams and a concave mirror arranged so as to condense said reflected laser beams in a plurality of focal points lying in one plane. Such a device is known from "LASER FOCUS" vol. 15, No. 11 (Nov. 1979), pages 68 to 71, Newton, Mass. US; S.L. REAM: "A convex beam integrator".

In the conventional optical device of the type described above, it is difficult to substantially eliminate an adverse diffraction effect caused on the boundary portions of the respective plane segment mirrors. Accordingly, in a case where this conventional reflection type optical device is used, the energy of the laser beam is not evenly distributed as a heat source on a working point of a material to be worked, and for example, in an ordinary surface heat treatment, a quenching operation is not evenly carried out.

## SUMMARY OF THE INVENTION

An object of this invention is to eleminate defects of prior art and to provide a reflection type optical device having a pin-hole plate located in combination with the mirror arrangement described above for obtaining an evenly distributed energy of the laser beam on the working spot.

This object is achieved by the reflection type optical device of this invention which comprises a convex integration mirror prepared by forming side by side a plurality of plane segment mirrors on a material having a convex outer configuration so that a laser beam is divided and reflected by said integration mirror as reflected laser beams and a concave mirror arranged so as to condense said reflected laser beams in a plurality of focal points lying in one plane, and which is characterized by the facts that a metal plate provided with a plurality of pin-holes corresponding to the numbers of said focal points is located in said plane so that said focal points coincide with the locations of said pin-holes, respectively.

## BRIEF DESCRIPTION OF THE DRAWINGS

In the accompanying drawings:

FIG. 1 shows a mirror arrangement of a reflection type optical device according to this invention;
FIG. 2 is a plan view of an integration mirror used in the optical device shown in FIG. 1;
FIG. 3 shows a lens arrangement for explaining the operational principle according to this invention;
FIG. 4 shows a brief plan view of one example of a plate provided with a plurality of pin holes;
FIGS. 5 and 6 are graphs representing energy distribution of laser beam irradiated;

FIG. 7 shows a diffraction pattern of a laser beam passing a rectangular slit;
FIG. 8 is a view showing relationship between a pin-hole and an intensity distribution of a focused beam based on the pattern shown in FIG. 9; and
FIG. 9 shows a mirror arrangement of another embodiment according to this invention.

## DESCRIPTION OF THE PREFERRED EMBODIMENT

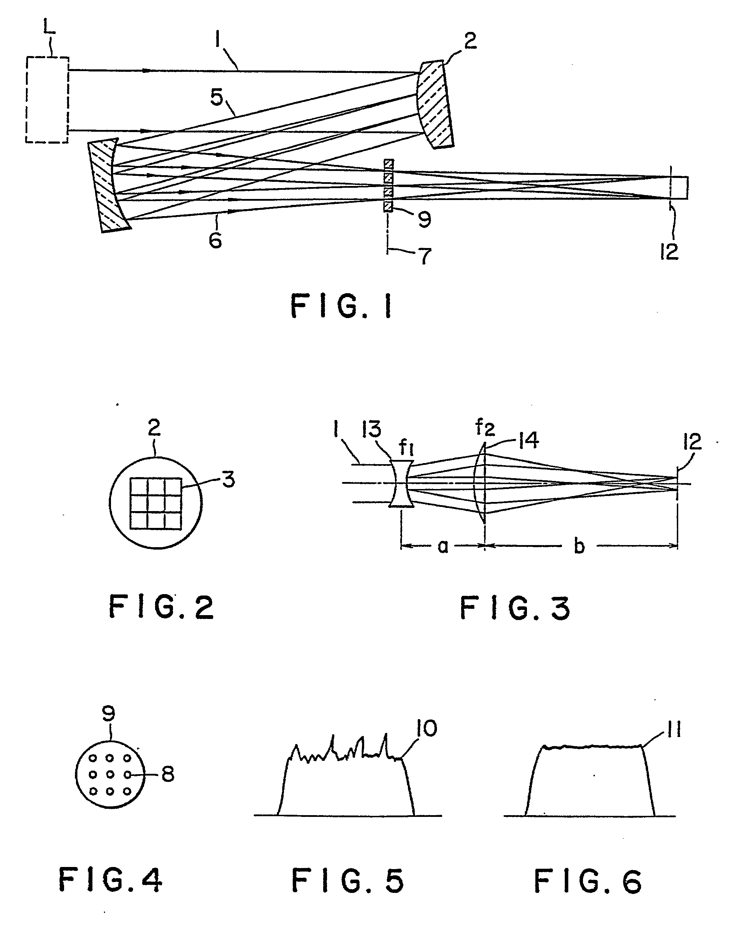

Referring to FIG. 1, which shows one embodiment of the mirror arrangement of this invention including a pin-hole plate described in detail hereinafter, laser beam 1 is emitted from a laser oscillator with relatively high output such as a carbon dioxide gas laser oscillator, which is briefly shown by reference letter L. An integration mirror i.e. segmented mirror 2 having a convex mirror surface is arranged obliquely so as to reflect the projected laser beam in other directions as reflected and divided laser beams. The reflection type integration mirror 2 is generally formed by maching a convex surface of a mirror material so as to form a plurality of plane segment mirror elements 3 integrally on the mirror material side by side in a lattice form as shown in FIG. 2. A plurality of laser beams 5 divided and reflected by the plane segment mirrors 3 of the integration mirror 2 are combined into a plurality of condensed beams 6 by a concave mirror 4 arranged so as to reflect the divided laser beams 5 in directions different from those of the beams 5 projected on the concave mirror 4. According to the mirror arrangement described above, the laser beams 5 reflected by the respectivbe plane segment mirrors 3 are focused on one point of the workpiece as a rectangular image. This beam focusing characteristic will be described hereunder in conjunction with FIG. 3 showing one model of an arrangement of a light transmission type optical device. Referring to FIG. 3, a concave transmission type integration lens 13 is arranged instead of the integration mirror 2 shown in FIG. 1 apart from a convex lens 14 by a distance $\underline{a}$. A laser beam 1 projected from the lefthand side, as viewed in FIG. 3, of the integration lens 13 passes through the lenses 13 and 14 and is focused on a point or plane 12 of a material to be worked. With this arrangement, supposing that the focal distance of the integration lens 13 is $f_1$, the focal distance of the convex lens 14 is $f_2$ and the distance between the convex lens 14 and the working point 12 is $\underline{b}$, the following equation will be established.

$$\frac{1}{a+f_1}+\frac{1}{b}=\frac{1}{f_2} \quad \dots\dots\dots\dots\dots(1)$$

Accordingly, the distance $\underline{b}$ is obtained as follows:

$$b=\frac{f_2(a+f_1)}{a+f_1-f_2} \quad \dots\dots\dots\dots\dots\dots\dots\dots(2)$$

The size of the focused image on the working point 12 will be expressed by a magnification M as follows:

$$M = \frac{b}{a+f_1} = \frac{f_2}{a+f_1-f_2} \quad \dots\dots\dots\dots\dots(3)$$

As is understood from the equation (3), the magnification M of the focused image can be changed by changing the distance $\underline{a}$ between both the lenses 13 and 14 or by changing the focal distance $f_2$ without changing the focal distance $f_1$ of the concave integration lens 13, i.e. integration mirror 2 shown in FIG. 1, thus easily changing the area of the working point 12 as a heat source.

According to the embodiment shown in FIG. 1, the mirror arrangement of this invention is provided with a plurality of focused points of the laser beamns 6 reflected by the concave mirror 4 on a plane as designated by reference numeral 7, and accordingly, in a more preferred embodiment, a plate 9 provided with a plurality of pin-holes 8, such as shown in FIG. 4, is located at the position 7, FIG. 1, so that the focused points of the laser beams 6 are significantly accordant with the positions of the pin-holes 8 respectively to pass therethrough. Accordingly, it will be understood that the diameter of each pin-whole 8 and the distance between adjacent two pin-holes 8 can easily be calculated on the basis of the members of t he segment mirrors 3 and the radius of curvature of the concave mirror 4. The pin-hole plate 9 is preferably made of a metal having a relatively high heat conductivity such as copper, aluminium or the like and the pin-hole plate 9 is always cooled by cooling means, not shown. The inlet side opening of each pin-hole 8 may be formed to have a bellmouth shape to reduce the inlet side surface area of the pin-hole plate 9 thereby to decrease the refraction of the laser beams 6 on that surface. Although it is desired that the cross sectional shape of each pin-hole 8 is of circular or rectangular, the shape is not necessarily limited to these shapes.

As described hereinabove, according to the refraction-type mirror arrangement of the optical device, the area to be heated on a material to be worked can be freely changed, and moreover, the location of the pin-hole plate 9 in combination with the mirror arrangement described above extremely improves the distribution of the laser beam energy evenly. FIGS. 5 and 6 show the energy distribution conditions in the cases where the pin-hole plate 9 is not located (FIG. 5) and is located (FIG. 6).

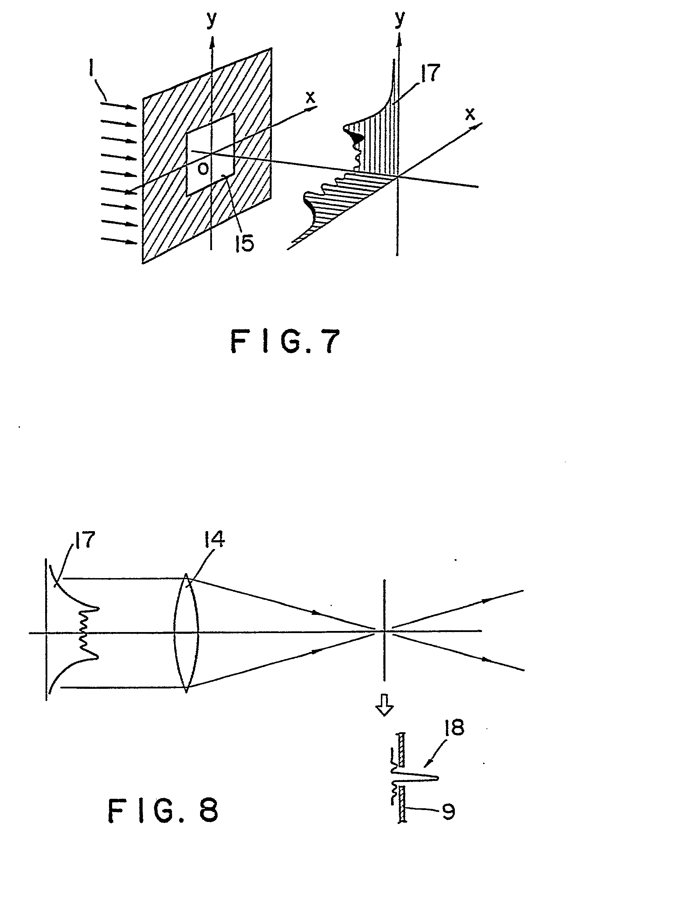

This energy distribution phenomenon will be understood from the following description with reference to FIGS 7 and 8. When it is considered that diffraction pattern of the laser beam reflected on one plane surface of one rectangular segment mirror is equivalent to the diffraction pattern 17 of a rectangular opening of a slit 15 as shown in FIG. 7, an intensity distribution of the diffracted image within the Fresnel area exhibits an extreme unevenness as shown. This Fresnel's diffraction phenomenon is observed in a case where a concave segmented mirror is used as well as the case in use of the convex segmented mirror on the basis of the fact that the laser beams reflected by the respective segment mirrors are finally overlapped on the working point of the workpiece, thus exhibiting the unevenness of the laser beam energy distribution.

However, the laser beam included in this diffraction pattern is provided with vector components advancing in various directions, and when such laser beam is focused by a lens or a concave mirror, the beam components directed in various directions which are not condensed on the focal point are focused peripherally apart from the focal point as designated by reference numeral 18 in FIG. 8. The location of the pin-hole plate 9 cuts the peripherally focused beam components and only the centrally directed beam components can pass the pin-hole 8, thus obtaining evenly distributed laser beam having a rectangular shape on a surface of a workpiece to be thermally treated with.

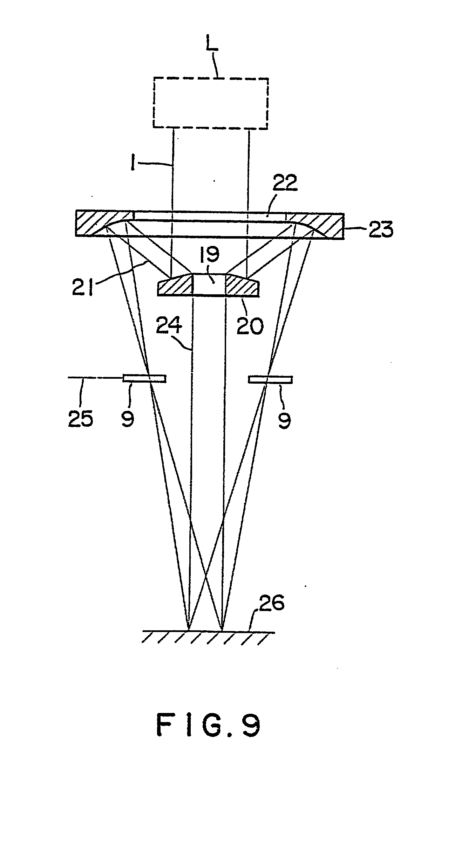

FIG. 9 shows another embodiment of a reflection type optical device according to this invention in which an integration mirror 20, i.e. segmented mirror consisting of a plurality of plane segment mirrors, is arranged on the light pass of the laser beam 1 from a laser oscillator L. The integration mirror 20 is provided with a central through hole 19 having a substantially rectangular shape corresponding to that of one segment mirror of the integration mirror 20 and the through hole 19 is aligned with the axis of the laser beam 1. A concave mirror 23 having a substantially circular configuration is located above the integration mirror 20, as viewed in FIG. 6, at a position in a plane where laser beams 21 reflected and divided by the integration mirror 20 are received so that the concave mirror 23 is provided with a central hole 22 through which the whole laser beams pass. In this embodiment, a plurality of pin-hole plates 9 of substantially the same type as those referred to with the former embodiment are arranged respectively at the focused positions 25 on the passes of the respective reflected and divided beams 21 so as to surround the laser beams 24 passing through the central hole 19 of the integration mirror 20. The location of the pin-hole plates 9 are adjusted by the same manner as that described before with respect to the former embodiment. The concave mirror 23 is preferably provided with such radius of curvature as that each reflected laser beam 21 passing through the pin-hole plate 9 is superimposed on an irradiated point of the laser beam 24 at a surface portion of a work 26 to be worked as a rectangular spot to be heated.

Acccording to this embodiment, since the peripheral portion of the laser beam 1 is inverted and then superimposed on the central portion thereof, the energy of the laser beams is distributed more evenly on the surface of the workpiece to be treated.

In the foregoing embodiments, although an integration mirror is provided with a plurality of plane segment mirrors each having a rectangular shape, plane segment mirrors each having another shapes such as a square shape can of course be utilized, and such integration mirror can be prepared by an ordinary machine working.

According to the reflection type optical device of the invention, energy of laser beam from a laser beam oscillator can be evenly distributed on a surface of a material to be thermally treated with and the surface area to be heated can be freely changed.

## Claims

1. Reflection type optical device comprising a convex integration mirror (2) prepared by forming side by side a plurality of plane segment mirrors on a material having a convex outer configuration so that a laser beam (1) is divided and reflected by said integration mirror as reflected laser beams (5) and a concave mirror arranged so as to condense said reflected laser beams (5) in a plurality of focal points lying in one plane (7) characterized in that a metal plate (9) provided with a plurality of pin-holes (8) corresponding to the numbers of said focal points is located in said plane (7) so that said focal points coincide with the locations of said pin-holes (8), respectively.

2. The optical device according to claim 1 wherein each of said segment mirrors has a rectangular shape.

3. The optical device according to claim 1 wherein each of said segment mirrors has a square shape.

4. The optical device according to claim 1 wherein said concave mirror (23, Fig. 9) is provided with a central hole (22) through which the whole laser beam (1) passes, said integration mirror (20) is provided with a central hole (19) axially aligned with said hole (22) of the concave mirror (23) to pass a part of the whole laser beam (1), said integration mirror (20) and said concave mirror (23) being arranged such that the divided and reflected laser beams (21) are superimposed on the Laser beam directly passing said integration mirror (20) on a surface (26) of a material to be worked.

5. The optical device according to claim 4 wherein a plurality of plates (9) provided with pin holes are located at the focal points of said concave mirror (23).

## Patentansprüche

1. Optische Reflexions-Vorrichtung mit einem konvexen Integratorspiegel (2) aus einer Vielzahl von auf einem Material mit konvexer Aussengestalt derart nebeneinander angeordneten, ebenen Spiegelsegmenten, daß vom Integratorspiegel ein Laserstrahl (1) aufgeteilt und als reflektierte Laserstrahlen (5) reflektiert wird, und mit einem so angeordneten konkaven Spiegel, daß die reflektierten Laserstrahlen (5) in eine Vielzahl von Brennpunkten konzentriert werden, die in einer Ebene (7) liegen, dadurch gekennzeichnet, daß in der genannten Ebene (7) eine Metallplatte (9) mit einer der Anzahl der Brennpunkte entsprechenden Mehrzahl von kleinen Löchern (8) so angeordnet ist, daß die Brennpunkte mit den Orten der kleinen Löcher (8) zusammenfallen.

2. Optische Vorrichtung nach Anspruch 1, bei welcher jedes der Spiegelsegmente rechteckige Gestalt aufweist.

3. Optische Vorrichtung nach Anspruch 1, bei welcher jedes Spiegelsegment quadratische Gestalt aufweist.

4. Optische Vorrichtung nach Anspruch 1, bei welcher der konkave Spiegel (23, Figur 9) mit einem Mittelloch (22) versehen ist, durch das der gesamte Laserstrahl (1) hindurchgeht, der Integratorspiegel (20) mit einem Mittelloch (19) versehen ist, das axial mit dem Loch (22) des konkaven Spiegels (23) fluchtet, so daß ein Teil des ganzen Laserstrahls (1) hindurchgeht und der Intergratorspiegel (20) und der konkave Spiegel (23) derart angeordnet sind, daß die aufgeteilten und reflektierten Laserstrahlen (21) dem direkt den Integratorspiegel (20) passierenden Laserstrahl auf einer Oberfläche (26) des zu bearbeitenden Materials überlagert werden.

5. Optische Vorrichtung nach Anspruch 4, bei welcher eine Vielzahl von Platten (9) mit kleinen Löchern in den Brennpunkten des konkaven Spiegels (23) vorgesehen ist.

## Revendications

1. Dispositif optique à réflexion comprenant un miroir convexe d'intégration (2) préparé en formant côte à côte plusieurs segments plans de miroirs sur une matière comportant une configuration extérieure convexe d'une manière telle qu'un faisceau laser (1) est divisé et réfléchi par ledit miroir d'intégration sous forme de faisceaux laser (5), et un miroir concave disposé de façon à condenser lesdits faisceaux laser réfléchis en plusieurs foyers situés dans un plan (7), caractérisé en ce qu'une plaque métallique (7) comportant plusieurs trous d'épingle (8) correspondant aux nombres desdits foyers est située dans ledit plan (7) tel que lesdits foyers coïncident avec les emplacements desdits trous d'épingle (8), respectivement.

2. Le dispositif optique selon la revendication 1 dans lequel chacun desdits segments de miroirs est de forme rectangulaire.

3. Le dispositif optique selon la revendication 1, dans lequel chacun desdits segments de miroirs est de forme carrée.

4. Le dispositif optique selon la revendication 1 dans lequel ledit miroir concave (23, Fig. 9) comporte un trou central (22) à travers lequel passe le faisceau laser complet (1), ledit miroir d'intégration (20) comporte un trou central (19) aligné axialement avec ledit trou (22) du miroir concave (23) pour laisser passer une partie du faisceau laser complet (1), ledit miroir d'intégration (20) et ledit miroir concave (23) étant agencés de telle manière que les faisceaux laser divisés et réfléchis (21) se superposent, sur une surface (26) d'une matière à traiter, au faisceau laser traversant directement ledit miroir d'intégration (20).

5. Le dispositif optique selon la revendication 4 dans lequel plusieurs plaques (9) portant des trous d'épingle sont situées aux foyers dudit miroir concave (23).

FIG. 1

FIG.2

FIG. 3

FIG.4

FIG. 5

FIG. 6

FIG.7

FIG.8

FIG.9